# EUROPÄISCHE PATENTSCHRIFT

(11) **EP 1 401 710 B1**
(45) Veröffentlichungstag und Bekanntmachung des Hinweises auf die Patenterteilung: **30.07.2008**
(21) Anmeldenummer: 02747369.3
(22) Anmeldetag: 11.06.2002
(51) Int. Cl.: B65B 13/26, A01F 15/14

(54) **KNOTERHAKEN UND DAMIT AUSGERÜSTETER GARNKNOTER**
KNOTTER HOOK AND CORD KNOTTER EQUIPPED WITH THE SAME
CROCHET DE NOUEUR ET NOUEUR DE FIL COMPORTANT CE DERNIER

(30) Priorität: 21.06.2001 DE 20110161 U
(43) Veröffentlichungstag der Anmeldung: 31.03.2004
(73) Patentinhaber: Rasspe Systemtechnik GmbH & Co. KG, 42651 Solingen (DE)
(72) Erfinder: SCHUMACHER, Heinz-Günter, 57612 Eichelhardt (DE)
(74) Vertreter: Grosse - Schumacher - Knauer - von Hirschhausen
(86) Internationale Anmeldenummer: PCT/EP2002/006355
(87) Internationale Veröffentlichungsnummer: WO 2003/000552

(56) Entgegenhaltungen:
- US-A- 2 793 890
- US-A- 4 022 501
- US-A- 4 735 446

## Beschreibung

Die Erfindung bezieht sich auf einen Knoterhaken der dem Oberbegriff des Anspruchs 1 entsprechenden Art und einen damit ausgerüsteten Garnknoter.

Derartige Garnknoter sind zum Beispiel unter dem Namen "System McCormick" seit langem bekannt und in dem Buch "Landmaschinenlehre Band II" von Prof. Dr.-Ing. Heinrich Heyde (Herausgeb.) VEB Verlag Technik Berlin, Berlin 1965 auf den Seiten 128 bis 131 sowie im Dokument US 2.793.890 beschrieben.

Solche Garnknoter oder Garnknüpfer werden in Ballenpressen für Stroh, Heu und ähnlichem Gut sowie in der Wertstoffverwertung z.B. für die Bündelung von Papier, Textilien, dünnen Blechen und dergleichen eingesetzt. Der Garnknoter findet eine weitere Anwendung in Bindemaschinen zum Umbinden von kleinen Bunden aus stengeligem Material mit Garn. Unter stengeligem Material soll in erster Linie landwirtschaftliches oder gartenbauliches Bindegut wie Porree, Zwiebelpfeifen, Pfropfunterlagen, Blumen, einzelne Pflanzen mit ihren Zweigen wie Rosensträucher und dergleichen verstanden werden. Solche Bindemaschinen oder Bindeeinrichtungen können aber auch Bestandteil von Verpackungsanlagen für die Umschnürung von Packen, Ballen oder Bündeln aus hierfür geeigneten Materialien sein.

In stationären oder mobilen Pressen wird das Preßgut in einen im Querschnitt rechteckigen Preßkanal gestopft. Aus dem zusammengepreßten im Querschnitt rechteckigen Preßgutstrang werden quaderförmige Packen, die auch als Ballen bezeichnet werden, abgeteilt, die in zur Kanalrichtung parallelen Ebenen mit Pressengarn umgeben sind, welches vor dem Ausstoß des Ballens aus dem Preßkanal zu einer geschlossenen Umschnürung verknotet wird, wobei im Falle von eingebauten Einfachknotern der Garnstrang von dem Knoten getrennt und für die nächste Umschnürung geklemmt wird. Bei dem Einsatz von Doppelknotern werden zwei Garnstränge nur in dem Zeitabschnitt zwischen der Bildung des ersten und des zweiten Knotens geklemmt. Die Vorgänge des Verknotens, Abschneidens und Klemmens übernehmen die Garnknoter.

Je nach Breite des quaderförmigen Ballens und dem in diesem herrschenden Druck sind in einer Presse ein oder mehrere Garnknoter nebeneinander auf einer gemeinsamen Antriebswelle montiert. Die Anzahl der Knoter und der die Garnstränge jeweils zuführenden Pressenelemente, nämlich der sogenannten Pressennadeln, sind durch die Anzahl der notwendigen Umschnürungen eines Ballens bestimmt.

Die Antriebswelle befindet sich entweder oberhalb oder unterhalb des im wesentlichen waagerecht angeordneten Preßkanals; bei einer anderen Position des Preßkanals ist die Antriebswelle seitlich angeordnet.

Die Pressennadel führt im Falle eingebauter Einfachknoter den für die Umschnürung und Verknotung des Ballens erforderlichen Garnstrang hinter dem durch den in Längsrichtung des Preßkanals hin- und hergehenden Preßkolben abgeteilten quaderförmigen Ballen zu dem Garnknoter. Dort wird der Garnstrang über die Zunge des Knoterhakens gelegt und weiter zu der Garnklemmeinrichtung transportiert. Von letzterer verläuft bereits das Ende des vorerwähnten Garnstrangs über die Knoterzunge zu einer Umlenkkante des Messerhebels und weiter um den gesamten Ballen. Sind Doppelknoter montiert, werden sowohl der über der Oberseite als auch der entlang der Unterseite eines Ballens verlaufende Garnstrangabschnitt von der Pressennadel über die Zunge des Knoterhakens in die Garnklemmeinrichtung befördert.

Bei Bindemaschinen der eingangs erwähnten Art wird das Bindegut zur Bildung eines Bundes auf einem Arbeitstisch, der sowohl waagerecht als auch geneigt angeordnet sein kann, abgelegt. Eine sichelförmige Bindenadel führt den Garnstrang um das gebündelte Bindegut so, daß das Garnende, das im Knoter festgehalten wird, mit dem um das Bund gelegten Garnstrang im Knoter für eine Verknotung zusammentrifft.

Für das Zustandekommen eines vollständigen und haltbaren Knotens ist es Voraussetzung, daß vor der Einleitung des Knotvorgangs die am Knoterhaken schwenkbar angeordnete Knoterzunge, die zusammen mit dem Hakenteil des Knoterhakens das sogenannte Knotermaul bildet, fest auf dem Hakenteil des Knoterhakens anliegt oder, anders ausgedrückt: das Knotermaul muß geschlossen sein. Hierzu drückt ein federbelasteter Schließer auf eine am hinteren Ende der Knoterzunge drehbar gelagerte Zungenrolle. Wenn sich der Knoterhaken zur Bildung der Knotenschlaufen einmal um sich selbst dreht, wird die Rolle der Knoterzunge über eine Kurvenbahn geführt, so daß das anfangs geschlossene Knotermaul kurz vor dem Ende der Hakendrehung so weit geöffnet ist, daß die beiden zwischen Garnhalterung und Knoterhaken gespannten Garnstränge sich in das Knotermaul einlegen. Nach einer Umdrehung des Hakens um 360° ist das Hakenmaul wieder geschlossen. Die beiden vorerwähnten Garnstränge werden von dem an dem Messerhebel befestigten Messer durchschnitten, und die von dem Knoterhaken gebildeten Knotenschlaufen von dem Abstreifkamm des Messerhebels über die abgetrennten Garnstrangenden gestreift. Hierdurch entsteht ein Knotengebilde, das seine Endform - einen festen, zugezogenen Knoten - nach Beendigung des Abstreifvorgangs und der Einwirkung einer Zugkraft erhält, die von dem Preß- bzw. Bindegut ausgeht, das bestrebt ist sich wieder auszudehnen.

In Abhängigkeit des Ballengewichts und damit auch der Dicke des erforderlichen Pressengarns variiert der einstellbare Anpreßdruck, mit dem der Schließer die Zungenrolle beaufschlagt. Ferner variieren je nach Garndicke die Ausführungen des Knoterhakens, der Knoterzunge und der zugehörigen Zungenrolle.

Kurz vor Beginn einer Drehung des Knoterhakens liegen, wie bereits erwähnt wurde, die beiden zu verknotenden Garnstränge auf der Zunge des Knoterhakens. Durch diesen Auflagedruck und den Anpreßdruck des Schließers auf die Zungenrolle wird das Knotermaul geschlossen gehalten. Auch während der Drehung des Knoterhakens wird ein Schließdruck auf das Knotermaul ständig ausgeübt.

Die einen rechteckigen Ausschnitt im Kopf des Knoterhakens durchgreifende Knotenzunge ist auf einem Schwenkstift an dem Knoterhaken schwenkbar gelagert, der entweder aus Vollmaterial (Zylinderstift) oder aus gewickelten Blechen (Spannstift, Spiralspannstift) besteht. Durch eine zweckentsprechende Auswahl der Bohrungstoleranzen kann dieser Stift entweder in der Knoterzunge festgesetzt werden, so daß sich die Stiftenden in den beiden Wangen beidseitig des rechteckigen Ausschnitts im Hakenkopf drehen können, oder es wird der Schwenkstift in den vorerwähnten Wangen festgesetzt, so daß sich die Knoterzunge auf dem Schwenkstift drehen kann.

Die auf den Schwenkstift wirkenden Belastungen - durch den Zug des Pressengarns und/oder die Kraft des Schließers - sind erheblich. Im Feldeinsatz zeigt sich, daß sich der Schwenkstift unter diesen Belastungen gelegentlich axial versetzt und seitlich aus dem Hakenkopf hervortritt, wodurch die Garnstränge, die bei der Knotenbildung um den Hakenkopf geschlungen werden, beschädigt werden und in der Folge die Festigkeit des Knotens erheblich gemindert werden können, was im laufenden Betrieb des Knoters manchmal unbemerkt bleibt. Der axiale Versatz des Schwenkstiftes kann verursacht werden durch
- hohe Preßdichten, durch die die Zugkräfte in den zu verknotenden Garnsträngen so erhöht werden, daß resultierende Kräfte über die Zunge auf den Paßsitz des Schwenkstifts schädigend einwirken;
- eine ungünstige Paarung von Stift- und Bohrungstoleranzen;
- nicht exakt eingehaltene Stift- und Bohrungsabmessungen bzw. deren Toleranzen;
- nicht vorschriftsmäßig eingehaltene Festigkeits- oder Härtewerte für den Schwenkstift.

Es ist bekannt, den axialen Versatz des Schwenkstiftes zu verhindern, indem die Aufnahmebohrung in einer Wange des Knoterhakens als Sackbohrung, d. h. als nach außen durch einen Boden geschlossene Bohrung, ausgeführt wird.

Nach dem Einpressen des Schwenkstiftes bis vor den Boden der Sackbohrung wird zur vollständigen Sicherung des Schwenkstifts der Randbereich der Sackbohrung in der gegenüberliegenden Wange der Ausnehmung vor die dortige Stirnseite des Schwenkstiftes verstemmt.

Diese Stiftsicherung hat den Nachteil, daß die Knoterzunge nicht ausgebaut werden kann, wenn sie verschlissen oder beschädigt ist, da der Schwenkstift wegen des Bodens des Sacklochs keine Stirnfläche für das Ansetzen eines Austreibers darbietet.

Die Erfindung hat die Aufgabe, einen Knoterhaken so auszugestalten, daß ein axialer Versatz des Schwenkstifts, ausgeschlossen ist, wobei aber der Schwenkstift mit Hilfe eines Austreibers im Reparaturfall trotzdem entfernbar sein soll.

Diese Aufgabe wird durch den in Anspruch 1 angegebenen Knoterhaken gelöst. Es wird also die den Schwenkstift aufnehmende Bohrung in einer Wange des Knoterhakens gewissermaßen mit einem inneren Anschlag versehen, der die Bewegung des Schwenkstiftes nach außen unterbindet. Der Schwenkstift kann dann nur bis zu dem Anschlag eingetrieben werden. Der Randbereich der Bohrung in der anderen Wange wird zur Stiftsicherung in der anderen Richtung partiell verstemmt.

Im Reparaturfall bietet der Schwenkstift dank der im Durchmesser im Außenbereich nur geringfügig verkleinerten Bohrung eine Stirnfläche, gegen die ein Austreiber angesetzt werden kann. Wie Versuche zeigen, weiten sich die verquetschten Bereiche beim Austreiben des Schwenkstifts wieder auf. Nach der Montage eines Ersatzstiftes kann der Randbereich der Bohrung erneut, jedoch etwas versetzt gegenüber der anfänglichen Verquetschung, verstemmt werden.

Ein in Betracht kommendes Maß für das radiale Hineinragen des Innenvorsprungs in den lichten Querschnitt der Teilbohrung sind einige Zehntel Millimeter (Anspruch 2).

Gemäß Anspruch 3 kann der Innenvorsprung durch eine umlaufende Innenschulter der Bohrung gebildet sein, also indem diese als Stufenbohrung ausgebildet ist. Hier ist also ein über den Umfang durchgehender Anschlag vorhanden.

Alternativ kann aber gemäß Anspruch 4 der Anschlag nur an einer Umfangsstelle in Gestalt eines am Rand des lichten Querschnitts der Bohrung in diesen eintretenden Querstiftes vorhanden sein.

Gemäß Anspruch 5 ist es zweckmäßig, den Innenvorsprung auf der durch das vorbeigleitende Pressengarn am meisten belasteten Seite des Knoterhakens vorzusehen.

Die Erfindung verwirklicht sich gemäß Anspruch 6 auch in einem mit dem Knoterhaken eines der Ansprüche 1 bis 4 ausgerüsteten Garnknoter.

In der Zeichnung ist ein Ausführungsbeispiel der Erfindung dargestellt.
- Fig. 1: zeigt eine Seitenansicht auf einen auf der Knoterwelle angeordneten Garnknoter, in Richtung der Knoterwelle gesehen;
- Fig. 2: zeigt eine perspektivische Ansicht der eigentlichen Knotvorrichtung;
- Fig. 3: zeigt eine Seitenansicht eines Knoterhakens des Standes der Technik;
- Fig. 4: zeigt eine entsprechende Ansicht eines erfindungsgemäß ausgestalteten Knoterhakens;
- Fig. 5: zeigt eine Ansicht gemäß Fig. 4 von links;
- Fig. 6: zeigt eine vergrößerte Wiedergabe des in Fig. 5 mit VI bezeichneten Bereichs.

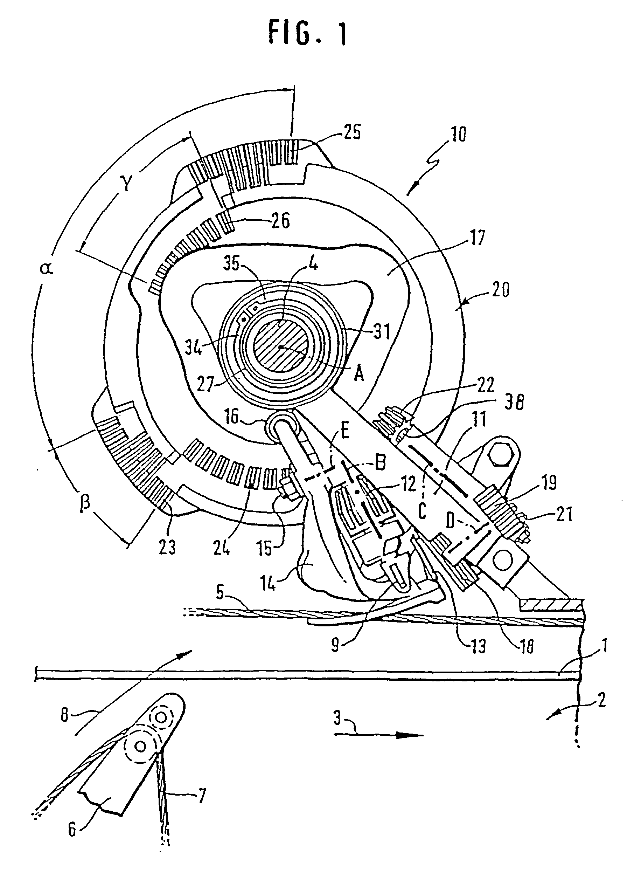

In Fig. 1 ist die obere Wandung 1 eines Pressenkanals 2 wiedergegeben, durch den das kompaktierte Preßgut, z.B. Stroh, im Sinne des Pfeiles 3 gefördert wird. Oberhalb des Pressenkanals 2 ist mit Abstand oberhalb der oberen Wandung 1 eine sich quer über die Breite des Pressenkanals 2 erstrekkende Knoterwelle 4 um ihre Achse A drehbar gelagert, auf der, je nach Breite des Pressenkanals 2, zwei bis sechs Garnknoter 10 angeordnet sind. Jedem Garnknoter 10 ist eine in einer vertikalen Längsebene um den Preßballen gelegte Bindegarnschlaufe zugeordnet, die in dem Ausführungsbeispiel der Fig. 1 durch die Bildung zweier Knoten geschlossen wird, die durch den Garnknoter 10 hergestellt werden. Von der in der Förderrichtung 3 voreilenden Stirnseite des Preßballens kommt der über die Oberseite des Preßballens laufende Strang 5 des Bindegarns, der durch nicht dargestellte, auf Fig. 1 links von dem Garnknoter 10 angeordnete Mittel strammgehalten wird. Die Pressennadel 6 führt um die rückwärtige Stirnseite des Preßballens von unten einen weiteren Strang 7 des Bindegarns im Sinne des Pfeiles 8 hoch, so daß der Strang 7 im Bereich des Garnknoters 10 mit dem Strang 5 zusammengebracht und verknotet werden kann.

Der Garnknoter 10 umfaßt einen Knoterhaken 9, der im Knoterrahmen 11 um eine zur Knoterwelle 4 radiale, gemäß Fig. 1 schräg aufwärts gerichtete Achse B drehbar und über ein Ritzel 12 um diese Achse B antreibbar ist.

Ein Messer 13 ist quer zu den Strängen 5 und 7 des Bindegarns beweglich angeordnet, um das Garn nach der Knotenbildung abzuschneiden. Das Messer 13 ist an einem Messerhebel 14 angebracht, dessen Wellenzapfen 15 um die Achse E in einem Lager im Knoterrahmen 11 schwenkbar ist und dabei durch eine Rolle 16 bewegt wird, die sich in einer Nut 17 der als Ganzes mit 20 bezeichneten Knoterscheibe verlagert.

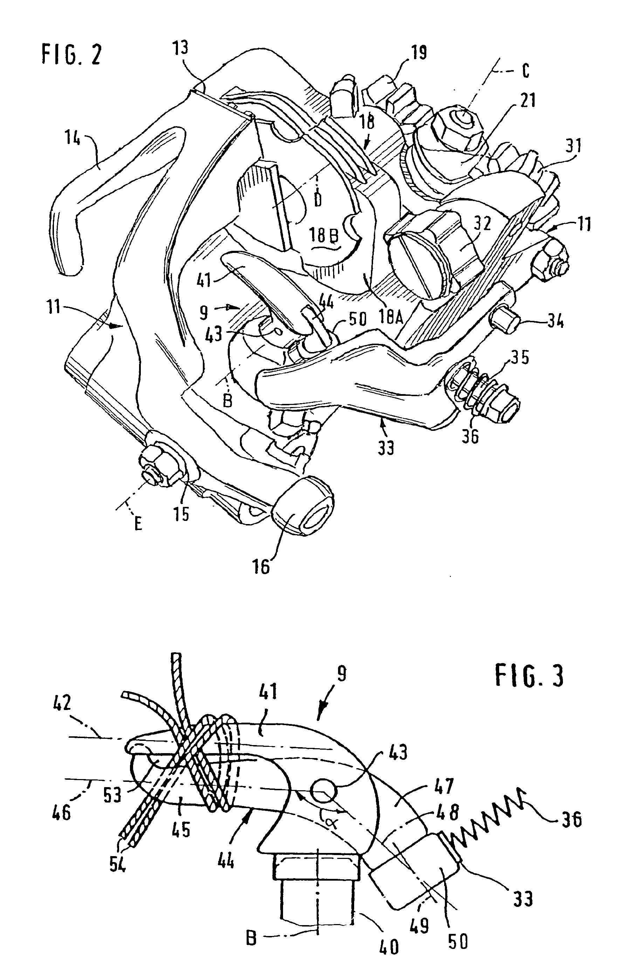

18 ist der Garnhalter, der die Stränge 5 und 7 während bestimmter Arbeitsabläufe des Knoterhakens 9 und des Messers 13 in Position hält und der um eine unter etwa 45° nach vorn in einer vertikalen Ebene geneigte Achse D drehbar ist. Der Garnhalter 18 umfaßt den eigentlichen Halter 18A und den Mitnehmer 18B (Fig. 2), welcher mit seinem Schaft in einem Lager im Knoterrahmen 11 geführt ist. Der Antrieb erfolgt dabei über ein Ritzel 19, welches mit einer Schnecke 21 in Eingriff steht, die von einem Ritzel 22 antreibbar ist. Die Schnecke 21 sitzt an einem Ende einer Ritzelwelle 38 mit der Achse C, an deren anderem Ende das Ritzel 22 befestigt ist.

Die Ritzel 12 und 22 werden bei Knotern, die bei einer Umdrehung der Knoterantriebsscheibe nur einen Knoten erzeugen, von jeweils einem Zahnsegment auf der Knoterscheibe angetrieben. Das Bindeverfahren ist im einzelnen in der EP 0 237 771 beschrieben.

Bei Knotern jedoch, die im Ausführungsbeispiel bei einer Umdrehung der Knoterscheibe zwei Knoten erzeugen, werden die Ritzel 12 und 22 durch Paare von Zahnsegmenten 23,24 bzw. 25,26 angetrieben, die auf der in Fig. 1 dem Betrachter zugewandten Flachseite der Knoterscheibe 20 im Bereich deren äußeren Randes angeordnet sind. Die Zahnsegmente 24,26 sind untereinander gleich und liegen radial etwas weiter innen, so daß sie bei der Drehung der Knoterscheibe 20 nur mit dem Ritzel 22 in Eingriff kommen können. Die Zahnsegmente 23,25 sind ebenfalls untereinander gleich und liegen radial ganz außen und treiben das Ritzel 12 an.

Die Zahnsegmente 25,26 folgen im übrigen den Zahnsegmenten 23,24 bei einer Drehung der Knoterscheibe 20 entgegen dem Uhrzeigersinn um einen Winkel α von etwa 115° in Umfangsrichtung nach. Die Zahnsegmente 23,25 erstrecken sich über einen Winkel β von etwa 30°, die Zahnsegmente 24,26 um einen Winkel γ von etwa 40°.

Der in Fig. 1 dargestellte Knoter 10 vollführt bei einer Umdrehung der Knoterscheibe 20 - angetrieben durch die Zahnsegmente 23,24 bzw. 25,26 - rasch hintereinander zwei Verknotungen, nämlich die erste, die den hinter der rückwärtigen Stirnseite eines Preßballens hochkommenden Strang 7 mit dem oberen Strang 5 verbindet und dadurch eine geschlossene Bindegarnschlaufe bildet, und eine zweite, die den an der vorderen Stirnseite des nachfolgenden Preßballens hochkommenden Strang mit dem auf der Oberseite des nachfolgenden Preßballens laufenden Strang verbindet und dadurch die Bildung einer neuen Bindegarnschlaufe für den neu zu bildenden Preßballen einleitet. Zwischen den Knoten wird das Bindegarn abgetrennt, so daß die aufeinanderfolgenden Preßballen voneinander getrennt werden.

Aus der Darstellung der Fig. 2 ist ersichtlich, daß mit der Schnecke 21 noch ein zweites Ritzel 31 zusammenwirkt, auf dessen Welle am anderen Ende ein Federnocken 32 angeordnet ist, der periodisch und nachgiebig einen Druck auf den Halter 18A ausübt, so daß dieser fester in den Mitnehmer 18B hineingedrückt wird und das Garn besonders fest hält.

Auf der gemäß Fig. 2 vorderen Seite des Knoterrahmens 11 ist der sogenannte Schließer 33 angeordnet, der als längliches Teil ausgebildet und an einem Ende auf einem im Knoterrahmen 11 sitzenden Zapfen 34 lose gehalten ist. Etwa in der Mitte ist der Schließer von einer Schraube 35 durchgriffen, die den Schließer 33 über eine Schraubendruckfeder 36 von außen gegen den Knoterrahmen 11 hin drückt. Das freie Ende des Schließers 33 besitzt auf der in Fig. 2 dem Betrachter abgewandten Seite eine Laufbahn, an der die Zungenrolle 50 bei der Drehung des Knoterhakens 9 um die Achse B zur Anlage kommt. Die Kraft der Feder 36 bewirkt, daß die Knoterzunge 44 in der Phase der Anlage der Zungenrolle 50 federnd fest gegen den Hakenteil 41 des Knoterhakens 9 gedrückt und das Knotermaul 53 (Fig. 3) besonders fest geschlossen gehalten werden.

In Fig. 3 ist ein zum Stand der Technik gehörender Knoterhaken 9 im einzelnen wiedergegeben. Er umfaßt einen zylindrischen Schaft 40 mit der Achse B, auf welchem er im Knoterrahmen 11 (Fig. 1) drehbar gelagert ist. Mit dem Schaft 40 fest verbunden ist das eigentliche Hakenteil 41, welches sich etwa in Richtung der Linie 42 senkrecht zu der Achse B erstreckt. Etwa im Bereich der Abwinklung ist der senkrecht zu der durch die Achse B und die Richtung 42 bestimmten Ebene sich erstreckende Schwenkstift 43 angeordnet. Der Knoterhaken 9 hat eine innere Ausnehmung, durch die die Knoterzunge 44 hindurchgreift, die als zweiarmiger Hebel ausgebildet ist, dessen vorderer Zungenteil 45 sich etwa in der zur Richtung 42 parallelen Richtung 46 über dem Hakenteil 41 des Knoterhakens 9 erstreckt und dessen hinterer Zungenteil 47 etwa in die Richtung 48 verläuft, die mit der Richtung 46 einen Winkel α von etwa 120° bildet. Am hinteren Ende des Zungenteils 47 ist um eine mit der Richtung 48 einen geringen Winkel bildende Achse 49 eine Zungenrolle 50 drehbar, an der der im Zusammenhang mit Fig. 2 beschriebene Schließer 33 angreift, der unter der Wirkung der hier nur schematisch angedeuteten elastischen Kraft in Gestalt der Feder 36 steht und dafür sorgt, daß in bestimmten Phasen der Knotenbildung auf die Knoterzunge 44 ein gemäß Fig. 3 entgegen dem Uhrzeigersinn gerichtetes Drehmoment ausgeübt wird, unter welchem das durch das Hakenteil 41 und das Zungenteil 45 gebildete Knotermaul 53 gegen die von den Garnsträngen 54 ausgeübten Kräfte geschlossen gehalten wird.

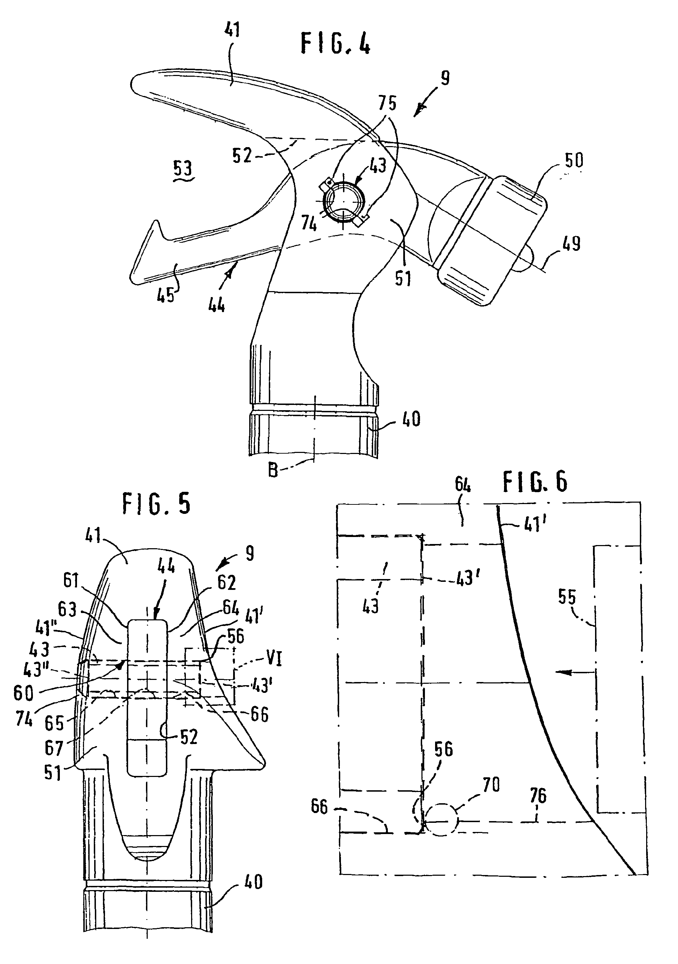

Hinsichtlich der vorstehend beschriebenen Merkmale entspricht die Ausführungsform der Fig. 4 bis 6 derjenigen der Fig. 3. Es sind in den Fig. 4 bis 6 jedoch noch weitere Merkmale dargestellt, die Mittel zur axialen Fixierung des Schwenkstifts 43 betreffen.

Die Knoterzunge 44 ist als flaches Teil mit ebenen Seitenflächen 61, 62 (Fig. 5) ausgebildet und durchgreift eine durchgehende im Querschnitt rechteckige Ausnehmung 52 des durch den Scheitelbereich des Knoterhakens 9 gebildeten Hakenkopfs 51 derart, daß die Seitenflächen 61, 62 an dem den längeren Seiten des Querschnitts entsprechenden Begrenzungsflächen der Ausnehmung 52 anliegen. In dem Durchgriffsbereich ist die Knoterzunge 44 an dem Hakenkopf 51 auf einem Schwenkstift 43 schwenkbar gelagert, der senkrecht zur Hakenebene die beiden Wangen 63, 64 zu beiden Seiten der Ausnehmung 52 in fluchtenden Teilbohrungen 65, 66 und die Knoterzunge 44 in einer Teilbohrung 67 durchgreift. Die Bohrungen 65, 66, 67 bilden zusammen eine durchgehende Bohrung 60, in der der Schwenkstift 43 derart sitzt, daß sich entweder in der Teilbohrung 67 ein Preßsitz ergibt und der Schwenkstift 43 in den Teilbohrungen 65, 66 drehbar ist, oder daß sich in den Teilbohrungen 65, 66 ein Preßsitz ergibt und die Knoterzunge auf dem Schwenkstift 43 in der Teilbohrung 67 drehen kann.

Der Schwenkstift wird gemäß Fig. 5 von links in die Bohrung 60 eingedrückt. Die Bohrung 60 hat im Bereich ihres der bevorzugten Gleitfläche 41' des Hakenkopfes 41 benachbarten Ende, d. h. im Bereich der Teilbohrung 66 eine Innenschulter 56, gegen die beim Einpressen die Stirnseite 43' des Schwenkstiftes 43 zur Anlage kommt. Die Innenschulter 56 ragt jedoch radial nur einige zehntel Millimeter nach innen vor, so daß in dem äußeren Bereich 76 der Teilbohrung 66 der lichte Querschnitt nur unwesentlich verringert ist und jedenfalls ein wesentlicher Teil des Querschnitts der Stirnseite 43' des Schwenkstiftes 43 im Bereich des äußeren Teils 76 der Teilbohrung 66 liegt. Mit einem in seinem Durchmesser im wesentlichen dem Durchmesser des äußeren Teils 76 der Teilbohrung 66 entsprechenden Austreiber 55, der durch den äußeren Teil 76 der Teilbohrung 66 in Pfeilrichtung an der Stirnseite 43' zur Anlage bringbar ist, kann der Schwenkstift 43 gemäß Fig. 6 nach links ausgetrieben werden. Er kann aber nicht von selbst den durch die Innenschulter 56 gegebenen Anschlag überwinden und etwa nach außen über die Gleitfläche 41' hinaus austreten und dort das unter Spannung vorbeigleitende Pressengarn beschädigen.

Der Anschlag könnte außer durch die Innenschulter 56 auch durch einen gemäß Fig. 6 senkrecht zur Zeichenebene verlaufenden, in den Hakenkopf 51 eingepreßten Querstift 70 gebildet sein, bei dessen Vorhandensein die Teilbohrung 66 ohne Innenschulter 56 glatt durchgeführt sein könnte. Der Querstift 70 muß nur in den lichten Querschnitt der Teilbohrung 66 am Rand eingreifen, ohne den lichten Querschnitt für den Durchgriff eines Austreibers 55 zu versperren.

Der Innenvorsprung 56, 70 braucht nur einige Zehntel Millimeter in den lichten Querschnitt der Teilbohrung 66 hineinzuragen, um seine Funktion als Anschlag erfüllen zu können. Er darf andererseits den lichten Querschnitt nicht zu sehr verengen, damit der Austreiber 55 noch hindurchpaßt. Dies ist besonders zu beachten, wenn der Schwenkstift 43 hohl ist. Der Austreiber 55 muß dann einen Querschnitt aufweisen, der denjenigen des Innern des Schwenkstiftes 43 übersteigt, damit er an der Stirnseite 43' zur Anlage kommen kann.

Am gegenüberliegenden Ende liegt die dortige Stirnseite 43" des Schwenkstiftes 43 etwas unterhalb der äußeren Oberfläche 41" und ist diese an zwei einander gegenüberliegenden Umfangsstellen 75 verstemmt, d. h. mit einem geeigneten meißelartigen Werkzeug axial etwas eingedrückt, wodurch sich Werkstoffteile 74 radial nach innen vor die Stirnseite 43" verlagern und den Schwenkstift 43 auch in der gemäß Fig. 5 von rechts nach links verlaufenden Richtung arretieren.

Wenn der Schwenkstift 43 und/oder die Knoterzunge 44, die beide hoch beanspruchte Bauteile sind, verschlissen oder beschädigt sind, kann mittels eines Austreibers 55 die Verstemmung 75 gewissermaßen überwunden und rückgängig gemacht werden und der Schwenkstift 43 durch einige Hammerschläge auf den Austreiber 55 gemäß Fig. 6 nach links entfernt werden. Nach dem Wiedereinsetzen eines Schwenkstiftes 43 kann die Verstemmung 75 an versetzter Umfangsstelle erneut erfolgen.

## Patentansprüche

1. Knoterhaken (9) für einen Garnknoter (10) für Ballenpressen,
mit einem Knoterrahmen (11), mit einem drehbar an einem einen Drehzapfen bildenden Knoterhakenschaft (40) im Knoterrahmen (11) gelagerten Knoterhaken (9) mit einem von dem Knoterhakenschaft (40) seitlich ausladenden Hakenteil (41), welcher in der durch den Knoterhakenschaft (40) und das Hakenteil (41) gebildeten Ebene eine durchgehende Ausnehmung (52) etwa rechteckigen Querschnitts aufweist, die durch seitliche Wangen (63, 64) begrenzt ist,
mit einer die Ausnehmung (52) durchgreifenden Knoterzunge (44), die am Knoterhaken (9) um eine sich senkrecht zu der durch die Knoterhakenschaft (40) und das Hakenteil (41) gebildeten Ebene erstreckenden, die Wangen (63, 64) und die Knoterzunge (44) in jeweiligen Teilbohrungen (65, 66, 67) quer durchsetzenden Schwenkstift (43) schwenkbar gelagert ist,
**dadurch gekennzeichnet,**
**daß** in der Teilbohrung (66) der einen Wange (64) der Ausnehmung (52) ein radial nach innen vor die Stirnseite (43') des Schwenkstifts (43) ragender Innenvorsprung (56, 70) vorgesehen und der äußere Rand der Teilbohrung (65) der anderen Wange (63) vor die dortige Stirnseite (43") des Schwenkstifts (43) verstemmt ist.

2. Knoterhaken nach Anspruch 1, **dadurch gekennzeichnet, daß** der Innenvorsprung einige Zehntel Millimeter radial nach innen in den lichten Querschnitt der Teilbohrung (66) ragt.

3. Knoterhaken nach Anspruch 1 oder 2, **dadurch gekennzeichnet, daß** der Innenvorsprung durch eine umlaufende Innenschulter (56) der Teilbohrung (66) der Wange (64) gebildet ist.

4. Knoterhaken nach Anspruch 1 oder 2, **dadurch gekennzeichnet, daß** der Innenvorsprung durch einen in den lichten Querschnitt der Teilbohrung (66) der Wange (64) eingreifenden Querstift (70) gebildet ist.

5. Knoterhaken nach einem der Ansprüche 1 bis 4, **dadurch gekennzeichnet, daß** der Innenvorsprung (56, 70) an der Außenseite derjenigen Wange (64) vorgesehen ist, über die das Pressengarn im Betrieb des Knoterhakens (9) unter Spannung bevorzugt gleitet.

6. Garnknoter für Ballenpressen,
mit einem Knoterrahmen (11), mit einem drehbar an einem Drehzapfen bildenden Knoterhakenschaft (40) im Knoterrahmen (11) gelagerten Knoterhaken (9) mit einem von dem Knoterhakenschaft (40) seitlich ausladenden Hakenteil (41), welcher in der durch den Knoterhakenschaft (40) und das Hakenteil (41) gebildeten Ebene eine durchgehende Ausnehmung (52) etwa rechteckigen Querschnitts aufweist, die durch seitliche Wandungen (63, 64) begrenzt ist,
mit einer die Ausnehmung (52) durchgreifenden Knoterzunge (44), die am Knoterhaken (9) um eine sich senkrecht zu der durch die Knoterhakenschaft (40) und das Hakenteil (41) gebildeten Ebene erstreckenden, die Wangen (63, 64) und die Knoterzunge (44) in jeweiligen Teilbohrungen (65, 66, 67) quer durchsetzenden Schwenkstift (43) schwenkbar gelagert ist,
**dadurch gekennzeichnet,**
**daß** der Knoterhaken ein solcher nach einem der Ansprüche 1 bis 5 ist.

## Claims

1. Knotting hook (9) for a twine knotter (10) for balers, with a knotting frame (11), with a knotting hook (9) rotatably mounted on a knotting hook shaft (40), which forms a pivot pin , in the knotting frame (11), with a hook part (41), projecting laterally from the knotting hook shaft (40), which hook part has a continuous opening (52) with an approximately rectangular cross section in the plane formed by the knotting hook shaft (40) and the hook part (41), the opening being delimited by lateral cheeks (63, 64), with a knotting tongue (44) which passes through the opening (52) and which is pivotably mounted on the knotting hook (9) about a pivot pin (43) extending perpendicularly to the plane formed by the knotting hook shaft (40) and the hook part (41) and passing transversely through the cheeks (63, 64) and the knotting tongue (44) in respective part bores (65, 66, 67), **characterised in that** an inner projection (56, 70) which projects radially inwardly in front of the end face (43') of the swivel pin (43) is provided in the part bore (66) of one cheek (64) of the opening (52) and the outer edge of the part bore (65) of the other cheek (63) is caulked in front of the end face (43") there of the pivot pin (43).

2. Knotting hook according to claim 1, **characterised in that** the inner projection projects a few tenths of a millimetre radially inwardly into the open cross section of the part bore (66).

3. Knotting hook according to claim 1 or 2, **characterised in that** the inner projection is formed by a peripheral inner shoulder (56) of the part bore (66) of the cheek (64).

4. Knotting hook according to claim 1 or 2, **characterised in that** the inner projection is formed by a transverse pin (70) engaging in the open cross section of the part bore (66) of the cheek (64).

5. Knotting hook according to any one of claims 1 to 4, **characterised in that** the inner projection (56, 70) is provided on the outside of that cheek (64), across which the binding twine preferably slides under tension during the operation of the knotting hook (9).

6. Twine knotter for balers, with a knotting frame (11), with a knotting hook (9) rotatably mounted on a knotting hook shaft (40) which forms a pivot pin, in the knotting frame (11), with a hook part (41), projecting laterally from the knotting hook shaft (40), which hook part has a continuous opening (52) with an approximately rectangular cross section in the plane formed by the knotting hook shaft (40) and the hook part (41), the opening being delimited by lateral walls (63, 64), with a knotting tongue (44) which passes through the opening (52) and which is pivotably mounted on the knotting hook (9) about a swivel pin (43) extending perpendicularly to the plane formed by the knotting hook shaft (40) and the hook part (41), and passing transversely through the cheeks (63, 64) and the knotting tongue (44) in respective part bores (65, 66, 67), **characterised in that** the knotting hook is a hook according to any one of claims 1 to 5.

## Revendications

1. Crochet de noueur (9) pour un noueur de fil (10) de presses à balles comprenant un cadre de noueur (11), un crochet de noueur (9) monté à rotation sur un axe (40) de crochet de noueur, formé par un tourillon dans le cadre de noueur (11), ayant une partie de crochet (41) venant latéralement en saillie par rapport à l'extérieur, par rapport à l'axe (40) de crochet de noueur, ayant une cavité (52) traversante sensiblement de section rectangulaire, dans le plan formé par l'axe (40) de crochet de noueur et la partie de crochet (41),
cette cavité étant délimitée par des joues latérales (63, 64),
une languette de noueur (44) traversant la cavité (52), cette languette étant prévue sur le crochet de noueur (9) dans un plan perpendiculaire à l'axe (40) de crochet de noueur et à la partie de crochet (41),
les joues (63, 64) et la languette de noueur (44) recevant en pivotement dans des parties de perçage respectives (65, 66, 67), transversaux, la broche de pivotement (43),
**caractérisé en ce que**
dans la partie de perçage (66) de l'une des joues (64) de la cavité (52), il est prévu une partie en saillie intérieure (56, 70) venant radialement vers l'intérieur devant la face frontale (43') de la broche de pivotement (43) et le bord extérieur de la partie de perçage (65) de l'autre joue (63) étant maté devant la face frontale correspondante (43") de la broche de pivotement (43).

2. Crochet de noueur selon la revendication 1,
**caractérisé en ce que**
la saillie intérieure dépasse de quelques dixièmes de millimètres, radialement vers l'intérieur dans la section libre de la partie de perçage (66).

3. Crochet de noueur selon la revendication 1 ou 2,
**caractérisé en ce que**
la saillie intérieure est formée par un épaulement intérieur (56) périphérique de la partie de perçage (66) de la joue (64).

4. Crochet de noueur selon la revendication 1 ou 2,
**caractérisé en ce que**
la saillie intérieure est formée par une broche transversale (70) pénétrant dans la section libre du perçage partiel (66) de la joue (64).

5. Crochet de noueur selon l'une des revendications 1 à 4,
**caractérisé en ce que**
la saillie intérieure (56, 70) est prévue sur le côté extérieur respectif de la joue (64) par laquelle le fil de presse glisse de manière préférentielle sous précontrainte pendant le fonctionnement du crochet de noueur (9).

6. Noueur de fil pour presses à balles comprenant un cadre de noueur (11), un crochet de noueur (9) monté à rotation sur un tourillon formé par un axe (40) de crochet de noueur dans le cadre de noueur (11), avec une partie de crochet (41) déportée latéralement par rapport à l'axe (40) de crochet de noueur, cette partie de crochet ayant une cavité traversante (52) de section sensiblement rectangulaire dans le plan formé par l'axe (40) de crochet de noueur et la partie de crochet (41), cette cavité étant délimitée par des parois latérales (63, 64),
- une languette de noueur (44) traversant la cavité (52), cette languette étant montée pivotante sur le crochet de noueur (9) dans un plan perpendiculaire à l'axe (40) de crochet de noueur et à la partie de crochet (41), les joues (63, 64) et la languette de noueur (44) recevant en pivotement dans des parties de perçage (65, 66, 67) respectifs, la broche de pivotement (43),
**caractérisé en ce que**
le crochet de noueur est celui de l'une des revendications 1 à 5.
